# EUROPEAN PATENT APPLICATION

(11) **EP 4 661 039 A1**
(43) Date of publication of application: **10.12.2025**
(21) Application number: 24876253.6
(22) Date of filing: 15.08.2024
(51) Int. Cl.: H01G 11/50, H01G 11/30, H01G 11/24, H01G 11/32, H01G 11/26, H01G 11/86

(54) **LITHIUM-ION CAPACITOR, ELECTRIC DEVICE, AND LITHIUM SUPPLEMENTING METHOD**

(30) Priority: 11.10.2023 CN 202311317735
(71) Applicant: Zhongtian Energy Storage Technology Co., Ltd, Nantong, Jiangsu 226000 (CN)
(72) Inventor: REN, Dawei, Nantong, Jiangsu 226000 (CN); YANG, Wei, Nantong, Jiangsu 226000 (CN); LI, Lanxin, Nantong, Jiangsu 226000 (CN); SHA, Zongjian, Nantong, Jiangsu 226000 (CN); SHI, Weibo, Nantong, Jiangsu 226000 (CN); WU, Wenjing, Nantong, Jiangsu 226000 (CN); LU, Yi, Nantong, Jiangsu 226000 (CN); MIAO, Yonghua, Nantong, Jiangsu 226000 (CN)
(74) Representative: Lanchava, Bakuri
(86) International application number: PCT/CN2024/112318
(87) International publication number: WO 2025/077433

(57) **Abstract**

A lithium-ion capacitor, an electric device, and a lithium supplementing method. The lithium-ion capacitor comprises a positive electrode sheet and a negative electrode sheet. The positive electrode sheet comprises a positive electrode material applied to the surface of a positive electrode current collector, and the positive electrode material comprises a mixture of lithium iron phosphate, a conductive carbon material, a porous carbon material and a PVDF binder. The negative electrode sheet comprises a negative electrode material applied to the surface of a negative electrode current collector, the negative electrode material comprises hard carbon, a conductive carbon material, a thickening agent and an SBR binder, and the thickening agent comprises CMC-Li. When charged for the first time after formation, the lithium-ion capacitor is charged at an initial charging current of 0.1C to 0.5C for 1-5 hours, and then is charged at 0.2C to 4.0V to 4.3V; when the capacitor is charged to 70% to 100% of SOC, the charging is paused for 30 minutes to 60 minutes, and then the capacitor is charged at a reduced charging current of 0.01C to 0.08C until the voltage reaches an upper limit voltage of 4.0V to 4.3V to complete the first charging.

## Description

### Technical Field

The present application relates to the technical field of new energy, in particular to a lithium-ion capacitor, an electric device, and a lithium supplementing method.

### Background Art

For an energy storage device, it is a development trend in the future to possess high energy, high power density and high cycle stability at the same time. The supercapacitor has high power density and high efficiency, but its energy density is not as good as that of other energy storage devices such as lithium-ion batteries. In recent years, how to better combine the two together has become research focus. Thus, as a new energy storage device, the lithium-ion capacitor is widely concerned. The lithium-ion capacitor is a novel energy storage device that considers both electrochemical energy storage and physical energy storage, which is a device between a supercapacitor and a lithium-ion secondary battery, and has a relatively large power density and energy density as well as a relatively long cycle life. At present, the positive electrode of a lithium-ion capacitor is typically made up of battery anode material such as lithium cobalt oxide, lithium manganese oxide or lithium nickel cobalt manganese oxide (NCM), and the negative electrode is made up of a material such as hard carbon or soft carbon.

The anode material typically used in the lithium-ion capacitor, such as lithium cobalt oxide LiCoO₂, ternary NCM lithium nickel cobalt manganese oxide, can be easily and rapidly decomposed and release oxygen if the temperature reaches up to 200°C to 300°C when thermal runaway occurs, but it is easy for oxygen to react with an electrolyte gas evaporated at a high temperature, thus the safety risk is relatively high. At the same time, the material used in the negative electrode, such as hard carbon or soft carbon, will consume a large amount of Li⁺ from the positive electrode during the first charging because this kind of material has a low first charging efficiency, which is typically in the range of 70% to 85%, due to its material characteristics, so the reversible Li⁺ content is reduced, as is adverse to the increase of energy density of the lithium-ion capacitor.

Those skilled in the art need to consider how to solve the above-mentioned problem.

### Summary of the Invention

In order to solve the problems in the prior art, examples of the present application provide a lithium-ion capacitor, an electric device, and a lithium supplementing method.

The present application provides a lithium-ion capacitor comprising a positive electrode plate and a negative electrode plate, the positive electrode plate includes a positive electrode material coated on the surface of a positive electrode current collector, the positive electrode material comprises a mixture of lithium iron phosphate, a conductive carbon material, a porous carbon material, and a polyvinylidene difluoride (PVDF) binder, the negative electrode plate includes a negative electrode material coated on the surface of a negative electrode current collector, the negative electrode material comprises a hard carbon, a conductive carbon material, a thickener and a Styrene-Butadiene Rubber (SBR) binder, and the thickener includes Carboxymethyl cellulose lithium (CMC-Li).

In an example, the content of CMC-Li in the thickener accounts for 0.5% to 5% of the mass of the negative electrode material.

In an example, in the positive electrode material, the mass ratio of lithium iron phosphate is 85% to 98%, the mass ratio of conductive carbon material is 1% to 10%, the mass ratio of porous carbon material is 0.5% to 15%, and the mass ratio of PVDF binder is 2% to 7%.

In an example, the positive electrode material further includes a lithium supplementing agent, and the lithium supplementing agent includes Li₂NiO₂ or Li₅FePO₄, wherein the lithium supplementing agent accounts for 0.1% to 6% of the mass of the lithium iron phosphate.

In an example, the positive electrode material is prepared by coating a positive electrode slurry on the positive electrode current collector with a surface density of 100 g/m² to 220 g/m² and drying the same, the positive electrode slurry includes the positive electrode material mixed in N-Methyl-2-Pyrrolidone (NMP) solvent, wherein the NMP solvent is removed by drying at a temperature of 90 °C to 140 °C.

In an example, in the negative electrode material, the mass ratio of the hard carbon is 85% to 95%, the mass ratio of the conductive carbon material is 1% to 5%, the mass ratio of the thickener is 2% to 5%, and the mass ratio of the SBR binder is 0.5% to 5%.

In an example, the negative electrode material is prepared by coating a negative electrode slurry on the negative electrode current collector with a surface density of 50 g/m² to 150 g/m² and drying the same, the negative electrode slurry includes the negative electrode material mixed in deionized water, wherein the deionized water is removed by drying at a temperature of 80 °C to 120 °C.

In an example, the positive electrode plate and the negative electrode plate are subject to rolling with a certain rolling pressure before forming, after rolling, the compaction density of the positive electrode plate is controlled between 1.9 g/cm³ and 2.3 g/cm³, and the compaction density of the negative electrode plate is controlled between 0.8 g/cm³ and 1.1 g/cm³.

An example of the present application also provides an electric device comprising a main body and the lithium-ion capacitor as described in any one of the aforementioned examples, wherein the lithium-ion capacitor is configured to enable the electric device to provide electric energy to an external load.

An example of the present application also provides a lithium supplementing method for the lithium-ion capacitor, the lithium supplementing method for the lithium-ion capacitor is applied to the lithium-ion capacitor of any one of the aforementioned examples, and the lithium supplementing method for the lithium-ion capacitor comprises: during the initial formation charging in the formation process of the lithium-ion capacitor, the initial charging current is 0.1 C to 0.5 C, and the charging time is 1 hour to 5 hours; then, the charging is performed at 0.2C until the voltage reaches 4.0 V to 4.3 V; when 70% to 100% of the state of charge (SOC) is achieved by charging, the charging is stopped for 30 to 60 minutes, the charging current is reduced to 0.01 C to 0.08 C, the initial charging is completed after the voltage reaches the upper limit voltage of 4.0 V to 4.3 V.

The lithium-ion capacitor, the electric device, and the lithium supplementing method provided in the present application have at least the following beneficial effects:
Firstly, in the present application, the lithium iron phosphate material used as the main source of Li⁺ in the positive electrode has a structure of olivine type. The Fe-P-O bond formed by the phosphate group in its molecular structure has very high chemical structure stability, and is much stronger than the Ni-O, Co-O, and Mn-O bonds in the layered NCM structure. At a high temperature of 500 °C, its structure still will not be destroyed and decomposed to release oxygen molecules, and thus the lithium iron phosphate material has a good safety performance. The safety of the lithium-ion capacitor and the electric device using the same is significantly improved.

Secondly, in the present application, the hard carbon used in the negative electrode has many micropores and large specific surface area, and the process of forming Solid Electrolyte Interface (SEI) membrane on the negative electrode surface during the initial charging will consume a large amount of Li⁺ from the positive electrode, resulting in a reduction of reversible Li⁺. The content of Li⁺ released from the positive electrode is increased by incorporating a small amount of highly lithium-rich material and using the corresponding charging process. At the same time, CMC-Li thickener is used in the negative electrode for replacing the traditional Carboxymethyl Cellulose Sodium (CMC-Na) thickener. Since CMC-Li and CMC-Na are both carboxymethylation derivatives of cellulose and have thickening and emulsifying effects, the suspension stability of the negative electrode slurry is maintained. In addition, the Na⁺ is replaced by Li⁺ in the molecular structure, CMC-Li can ionize Li⁺ during charging, functioning to supplement lithium for the negative electrode. The present application can achieve cooperated lithium supplementing of the positive electrode and the negative electrode, and solve the defect of the ion supercapacitor in relation to the energy density.

Thirdly, in lithium-ion capacitor provided in the present application, the positive electrode plate and the negative electrode plate are constructed with a better electron conduction network in the interior, so that the positive electrode plate and the negative electrode plate have a better electron conduction performance. At the initial charging, the lithium supplementing material of the positive electrode may release Li⁺ in an amount of 2 to 5 times that released from the lithium iron phosphate at an equal mass at a voltage above 3.55V, and this portion of Li⁺ can be used to compensate for the Li⁺ consumption of the hard carbon at the initial charging. In this way, when the lithium-ion capacitor discharges after the initial charging is finished, more Li⁺ can be released from the negative electrode, improving the energy density of the lithium-ion capacitor.

### Description of Drawings

FIG. 1 is a structural schematic diagram of a lithium-ion capacitor provided in an example of the present application.
FIG. 2 is a structural schematic diagram of an electric device provided in an example of the present application.
FIG. 3 is a schematic diagram of the preparation process of the positive electrode plate in the preparation process of the lithium-ion capacitor provided in an example of the present application.
FIG. 4 is a schematic diagram of the preparation process of the negative electrode plate in the preparation process of the lithium-ion capacitor provided in an example of the present application.
FIG. 5 is a schematic diagram of the subsequent preparation process of the lithium-ion capacitor provided in an example of the present application, after the positive electrode plate and the negative electrode plate are prepared in the preparation process of the lithium-ion capacitor.
FIG. 6 shows a comparison diagram showing the charging and discharging comparison between the lithium-ion capacitor prepared in examples of the present application and the lithium-ion capacitor without lithium supplementation in traditional technology.

### Description of reference numerals of main elements:

| | |
|---|---|
| Lithium-ion capacitor | 10 |
| Positive electrode plate | 11 |
| Positive electrode current collector | 111 |
| Positive electrode material | 112 |
| Porous carbon material | 1121 |
| positive electrode granular conductive | 1122 |
| carbon material | |
| Linear conductive carbon material | 1123 |
| PVDF binder | 1124 |
| Lithium iron phosphate | 1125 |
| Highly lithium-rich material | 1126 |
| Negative electrode plate | 12 |
| Negative electrode current collector | 121 |
| Negative electrode material | 122 |
| Conductive carbon material | 1221 |
| Hard carbon | 1222 |
| Thickener | 1223 |
| SBR binder | 1224 |
| Diaphragm | 13 |
| Electric device | 2 |
| Main body | 20 |

The present application will be further explained in the following embodiments in conjunction with the accompanying drawings.

### Embodiments

The following description will refer to the accompanying drawings to fully describe the present application. The accompany drawings show exemplary examples of the present application. However, the present application can be implemented in various different forms and should not be construed as being limited to the exemplary examples set forth herein. These exemplary examples are provided for thorough and complete understanding of the present application, and to fully convey the scope of the present application to those skilled in the art. Similar reference numerals indicate same or similar components. The terms as used herein are simply used for the purpose of describing specific exemplary examples and are not intended to limit the present application. As used herein, "a", "an" and "the" in singular forms are intended to also include plural forms unless otherwise clearly indicated in the context. In addition, when used herein, "comprising" and/or "including" and/or "having" integers, steps, operations, components, and/or groups does not exclude the presence or addition of one or more other features, regions, integers, steps, operations, components, and/or groups thereof. Unless otherwise defined, all terms used herein, including technical and scientific terms, have the same meanings as those commonly understood by those of ordinary skill in the art to which the present application belongs. In addition, unless explicitly defined in the context, terms such as those defined in a general dictionary should be interpreted as having meanings consistent with their meanings in the relevant technology and the present application and will not be interpreted as idealized or overly formal meanings. The exemplary examples will be described in the following content in conjunction with the accompanying drawings. It should be noted that the components depicted in the accompanying drawings may not be shown in scale; and the same or similar components will be given same or similar reference numerals to indicate same or similar technical terms.

In the following, an embodiment of the present application will be further described in detail with reference to the accompanying drawings.

The present application provides a lithium-ion capacitor comprising a positive electrode plate and a negative electrode plate. The positive electrode plate includes a positive electrode material coated on the surface of a positive electrode current collector, and the negative electrode plate includes a negative electrode material coated on the surface of a negative electrode current collector.

The positive electrode material comprises a mixture of lithium iron phosphate, a conductive carbon material in linear form or granular form, a porous carbon material, and a PVDF binder. The negative electrode material comprises a hard carbon, a conductive carbon material in granular form, a thickener and a SBR binder, and the thickener includes CMC-Li.

In an example, in the positive electrode material, the mass ratio of lithium iron phosphate is 85% to 98%, the mass ratio of conductive carbon material is 1% to 10%, the mass ratio of porous carbon material is 0.5% to 15%, and the mass ratio of PVDF binder is 2% to 7%.

Furthermore, the mass ratio of lithium iron phosphate may specifically be 86%, 87%, 88%, 89%, 91%, 92%, 93%, 94%, 95%, 96%, 97%, 98%.

It can be understood that the lithium iron phosphate material used as the main source of Li⁺ in the positive electrode of the present application has a structure of olivine type. The Fe-P-O bond formed by the phosphate group in its molecular structure has very high chemical structure stability, and is much stronger than the Ni-O, Co-O, and Mn-O bonds in the layered NCM structure. At a high temperature of 500 °C, its structure still will not break down to release oxygen molecules, and thus the lithium iron phosphate material has a good safety performance. The safety of the lithium-ion capacitor and the electric device using the same is significantly improved.

Furthermore, the mass ratio of conductive carbon material in the positive electrode material may specifically be 2%, 3%, 4%, 5%, 6%, 7%, 8%, or 9%.

It can be understood that the conductive carbon material can be composed of one or more of a linear carbon material and a granular carbon material, wherein the linear carbon material may be for example carbon nanotubes, carbon fibers, and the granular carbon material may be for example acetylene black, carbon black. The conductive carbon material may form a conductive network of a multi-dimensional structure in point connection or linear connection, improving the electron conductivity between materials.

Furthermore, the mass ratio of the porous carbon material may specifically be 1%, 2%, 3%, 4%, 5%, 6%, 7%, 8%, 9%, 10%, 11%, 12%, 13%, 14%.

It can be understood that the specific surface area of the porous carbon material is in the range of 1,500 m²/g to 2,500 m²/g, and may also specifically be 1,600 m²/g, 1,700 m²/g, 1,800 m²/g, 1,900 m²/g, 2,000 m²/g, 2,100 m²/g, 2,200 m²/g, 2,300 m²/g, or 2,400 m²/g.

Furthermore, the mass ratio of the PVDF binder may specifically be 3%, 4%, 5%, or 6%.

In an example, the positive electrode material further includes a lithium supplementing agent, and the lithium supplementing agent includes Li₂NiO₂ or Li₅FePO₄, wherein the lithium supplementing agent accounts for 0.1% to 6% of the mass of the lithium iron phosphate.

Furthermore, the mass ratio of the lithium supplementing agent may specifically be 1%, 2%, 3%, 4%, or 5%.

It can be understood that one or more highly lithium-rich materials (such as Li₂NiO₂ or Li₅FePO₄) added in the positive electrode material serve as the source of Li⁺ for supplementing lithium in the positive electrode, and under the same mass condition, the highly lithium-rich materials may provide Li⁺ in an amount of 2 to 5 times that provided by lithium iron phosphate.

It can be understood that the content of Li⁺ released from the positive electrode is increased by incorporating a small amount of highly lithium-rich material in the positive electrode and using the corresponding charging process. At the initial charging, the lithium supplementing material at the positive electrode may release Li⁺ in an amount of 2 to 5 times that released from the lithium iron phosphate at an equal mass at a voltage above 3.55V, and this portion of Li⁺ can be used to compensate for the Li⁺ consumption of the hard carbon at the initial charging. In this way, when the lithium-ion capacitor discharges after the initial charging is finished, more Li⁺ can be released from the negative electrode, improving the energy density of the lithium-ion capacitor.

In an example, in the negative electrode material, the mass ratio of the hard carbon is 85% to 95%, the mass ratio of the conductive carbon material is 1% to 5%, the mass ratio of the thickener is 2% to 5%, and the mass ratio of the SBR binder is 0.5% to 5%.

Furthermore, the mass ratio of the hard carbon may specifically be 86%, 87%, 88%, 89%, 90%, 91%, 92%, 93%, or 94%.

Furthermore, the mass ratio of the conductive carbon material in the negative electrode material may specifically be 2%, 3%, or 4%.

It can be understood that the conductive carbon material can be composed of one or more of a linear carbon material and a granular carbon material, wherein the linear carbon material may be for example carbon nanotubes, carbon fibers, and the granular carbon material may be for example acetylene black, carbon black. The conductive carbon material may form a conductive network of a multi-dimensional structure in point connection or linear connection, improving the electron conductivity between materials.

Furthermore, the mass ratio of the thickener may specifically be 3% or 4%.

In an example, the content of CMC-Li in the thickener accounts for 0.5% to 5% of the mass of the negative electrode material, wherein the CMC-Li serves as the thickener and a source of Li⁺ in the negative electrode material.

It can be understood that CMC-Li thickener is used in the negative electrode material in place of the traditional CMC-Na thickener. Since CMC-Li and CMC-Na are both carboxymethylation derivatives of cellulose and both have thickening and emulsifying effects, the suspension stability of the negative electrode slurry is maintained. However, the Na⁺ in the molecular structure of CMC-Na is replaced by Li⁺, so CMC-Li can release Li⁺ via ionization during charging, functioning to supplement lithium for the negative electrode.

In an example, the positive electrode material is prepared by coating a positive electrode slurry on the positive electrode current collector with a surface density of 100 g/m² to 220 g/m² and drying the same. The positive electrode slurry includes the positive electrode material mixed in N-Methyl-2-Pyrrolidone (NMP) solvent, wherein the NMP solvent is removed by drying at a temperature of 90 °C to 140 °C.

In an example, the negative electrode material is prepared by coating a negative electrode slurry on the negative electrode current collector with a surface density of 50 g/m² to 150 g/m² and drying the same. The negative electrode slurry includes the negative electrode material mixed in the deionized water, wherein the deionized water is removed by drying at a temperature of 80 °C to 120 °C.

In an example, the positive electrode plate and the negative electrode plate are subject to rolling with a certain rolling pressure before forming. After rolling, the compaction density of the positive electrode plate is controlled between 1.9 g/cm³ and 2.3 g/cm³, and the compaction density of the negative electrode plate is controlled between 0.8 g/cm³ and 1.1 g/cm³.

It can be understood that, in lithium-ion capacitor provided in the present application, the positive electrode plate and the negative electrode plate are constructed with a better electron conduction network in the interior, so that the positive electrode plate and the negative electrode plate have a better electron conduction performance. The hard carbon used for the negative electrode in the present application has many micropores and large specific surface area, the process of forming Solid Electrolyte Interface (SEI) membrane on the negative electrode surface during the initial charging will consume a large amount of Li⁺ from the positive electrode, resulting in a reduction of reversible Li⁺. The content of Li⁺ released from the positive electrode is increased by incorporating a small amount of highly lithium-rich material in the positive electrode and using the corresponding charging process. At the same time, CMC-Li thickener is used in the negative electrode in place of the traditional CMC-Na thickener, and the CMC-Li can release Li⁺ via ionization during charging, functioning to supplement lithium for the negative electrode. The present application can achieve the cooperative lithium supplementation of the positive electrode and the negative electrode, solving the defect of the ion supercapacitor in relation to the energy density.

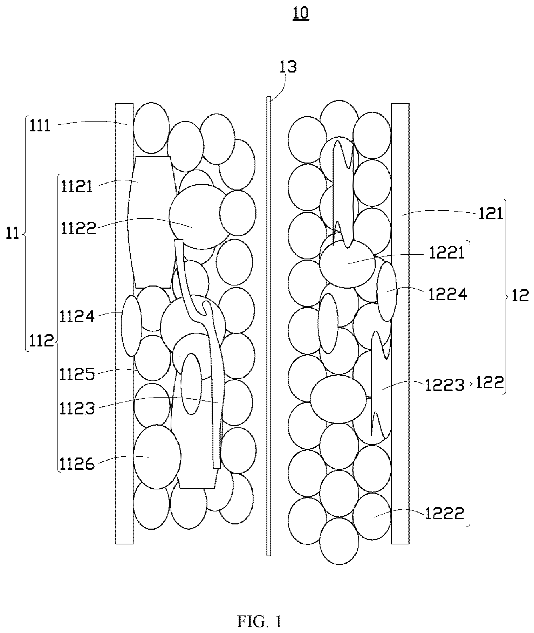

As shown in FIG. 1, which is a structural schematic diagram of a lithium-ion capacitor 10 provided in an example of the present application, in this example, the lithium-ion capacitor 10 comprises a positive electrode plate 11 and a negative electrode plate 12 which are spaced apart by diaphragm 13. The positive electrode plate 11 includes a positive electrode current collector 111 and a positive electrode material 112 coated on at least one surface of the positive electrode current collector 111. The positive electrode current collector 111 can be made of aluminum foil, and the positive electrode material 112 may include a porous carbon material 1121, a granular positive electrode conductive carbon material 1122, a linear conductive carbon material 1123, PVDF binder 1124, lithium iron phosphate 1125, and a highly lithium-rich material 1126. The negative electrode plate 12 includes a negative electrode current collector 121 and a negative electrode material 122 coated on at least one surface of the negative electrode current collector 121. The negative electrode current collector 121 may be made of copper foil, and the negative electrode material 122 may include a granular negative electrode conductive carbon material 1221, a hard carbon 1222, a thickener (CMC-Li) 1223, and a SBR binder 1224. It can be understood that the components and structures in the lithium-ion capacitor 10 shown in FIG. 1 are only provided by way of example and do not limit the mutual cooperative state of the components and structures of actual products.

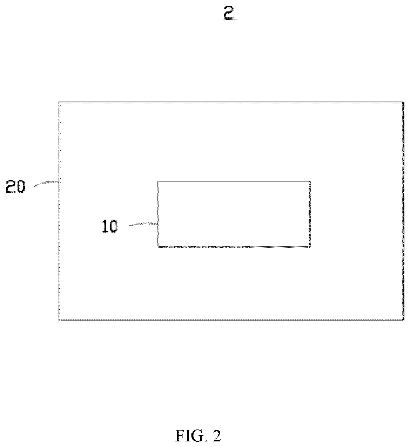

Furthermore, as shown in FIG. 2, an example of the present application also provides an electric device 2, which comprises a main body 20 and a lithium-ion capacitor 10 as described in any one of the aforementioned examples. The lithium-ion capacitor 10 is configured to enable the electric device 2 to provide electrical energy to external loads.

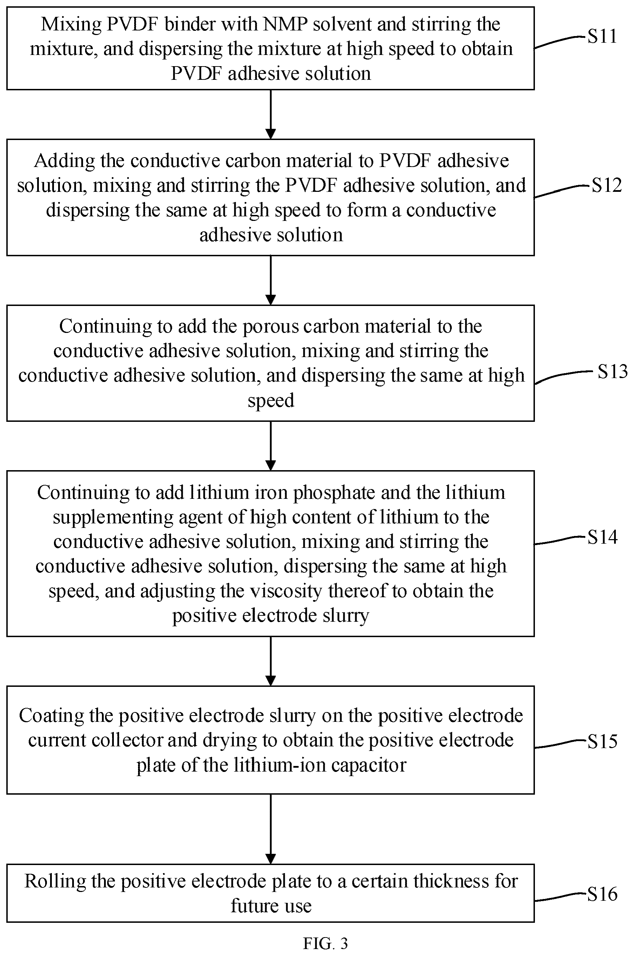

The preparation process of the lithium-ion capacitor in the present application may be as follows:
Furthermore, as shown in FIG. 3, the preparation process of the positive electrode plate may be as follows:
Step S11: Mixing PVDF binder with N-methyl-2-pyrrolidone solvent and stirring the mixture and dispersing the mixture at high speed to obtain PVDF adhesive solution.

Step S12: Adding the conductive carbon material to PVDF adhesive solution, mixing and stirring the PVDF adhesive solution, and dispersing the same at high speed to form a conductive adhesive solution.

Step S13: Continuing to add the porous carbon material to the conductive adhesive solution, mixing and stirring the conductive adhesive solution, and dispersing the same at high speed.

Step S14: Continuing to add lithium iron phosphate and the lithium supplementing agent with high content of lithium to the conductive adhesive solution, mixing and stirring the conductive adhesive solution, dispersing the same at high speed, and adjusting the viscosity thereof to obtain the positive electrode slurry.

Step S15: Coating the positive electrode slurry onto the positive electrode current collector, drying to obtain the positive electrode plate of the lithium-ion capacitor.

Step S16: Rolling the positive electrode plate to a certain thickness for future use.

In an example, the positive electrode material comprises a mixture of lithium iron phosphate, a conductive carbon material, a porous carbon material, and a PVDF binder, wherein the mass ratio of the lithium iron phosphate is 85% to 98%, the mass ratio of the conductive carbon material is 1% to 10%, the mass ratio of the porous carbon material is 0.5% to 15%, and the mass ratio of the PVDF binder is 2% to 7%, respectively. The lithium supplementing agent with high content of lithium, such as Li₂NiO₂ or Li₅FePO₄, is added and the lithium supplementing agent accounts for 0.1% to 6% of the mass of lithium iron phosphate. The above materials are added in a certain order to N-methyl-2-pyrrolidone solvent and mixed. The positive electrode slurry is prepared after the mixture is stirred at high speed and dispersed. The humidity of environment in this step is controlled to be less than 10%.

In an example, the positive electrode slurry is coated on an aluminum foil current collector with a certain surface density which is controlled between 100 g/m² and 220 g/m². The positive electrode plate for the lithium-ion capacitor is prepared after the N-methyl-2-pyrrolidone is removed by drying at a temperature of 90 °C to 140 °C. The relative humidity of environment in this step is controlled to be less than 10%.

It can be understood that the reason for controlling the humidity of environment is that the lithium supplementing agent for the positive electrode, such as highly lithium-rich material Li₂NiO₂ or Li₅FePO₄, is prone to react with water, leading to property failure. Therefore, the humidity of environment needs to be controlled.

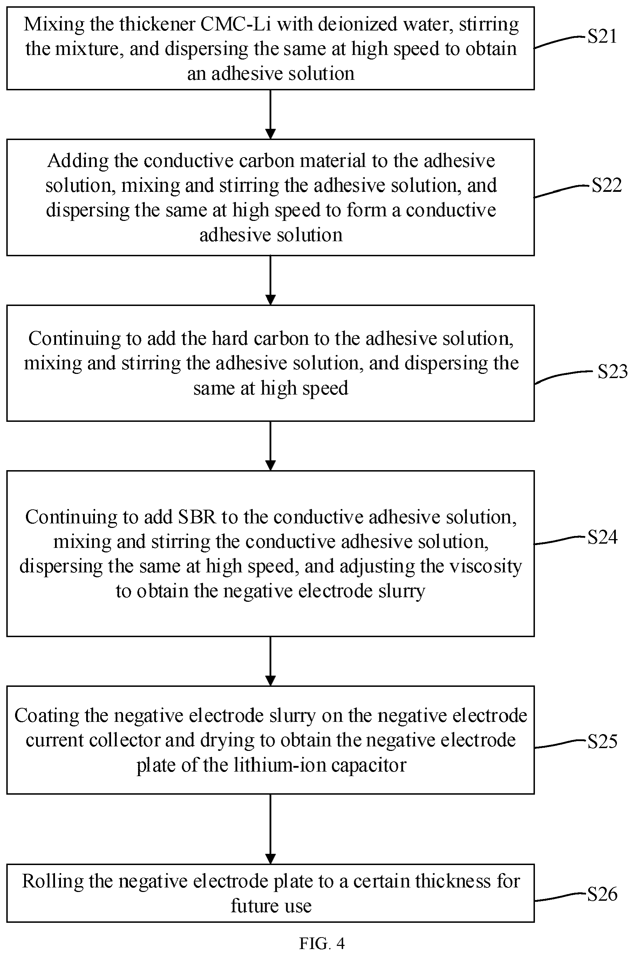

Furthermore, as shown in FIG. 4, the preparation process of the negative electrode plate may be as follows:
Step S21: Mixing the thickener CMC-Li with deionized water, stirring the mixture, and dispersing the same at high speed to obtain an adhesive solution.

Step S22: Adding the conductive carbon material to the adhesive solution, mixing and stirring the adhesive solution, and dispersing the same at high speed to form a conductive adhesive solution.

Step S23: Continuing to add hard carbon to the adhesive solution, mixing and stirring the adhesive solution, and dispersing the same at high speed.

Step S24: Continuing to add SBR to the conductive adhesive solution, mixing and stirring the conductive adhesive solution, dispersing the same at high speed, and adjusting the viscosity to obtain the negative electrode slurry.

Step S25: Coating the negative electrode slurry onto the negative electrode current collector and drying to obtain the negative electrode plate of the lithium-ion capacitor.

Step S26: Rolling the negative electrode plate to a certain thickness for future use.

In an example, the negative electrode material includes hard carbon, a conductive carbon material, a thickener, and a SBR binder, wherein, the mass ratio of the hard carbon is 85% to 95%, the mass ratio of the conductive carbon material is 1% to 5%, the mass ratio of the thickener is 2% to 5%, and the mass ratio of the SBR binder is 0.5% to 5%, respectively. Then, the above materials are added in a certain order to deionized water solvent for mixing. The negative electrode slurry is prepared after the mixture is stirred and dispersed at high speed.

In an example, the negative electrode slurry is coated on a copper foil current collector with a certain surface density which is controlled between 50 g/m² and 150 g/m². The negative electrode plate for the lithium-ion capacitor is prepared after the moisture is removed by drying at a temperature of 80 °C to 120 °C.

It can be understood that the positive electrode plate and the negative electrode plate are rolled with a certain rolling pressure. After rolling, the compaction density of the positive electrode is controlled between 1.9 g/cm³ and 2.3 g/cm³, and the compaction density of the negative electrode is controlled between 0.8 g/cm³ and 1.1 g/cm³.

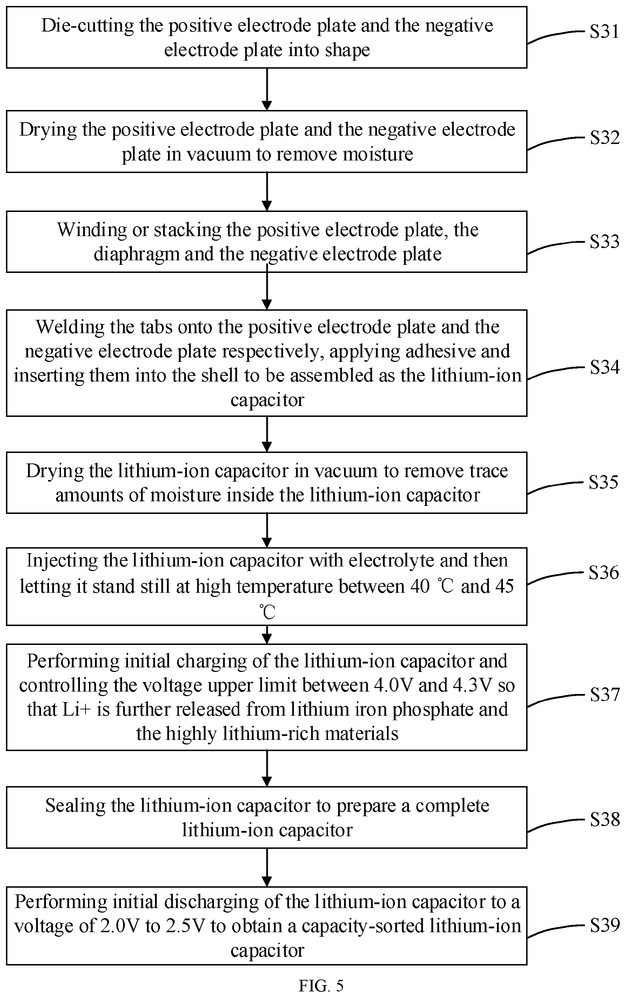

Furthermore, as shown in FIG. 5, after the positive electrode plate and the negative electrode plate are prepared, the subsequent preparation process of the lithium-ion capacitor includes:
Step S31: Die-cutting the positive electrode plate and the negative electrode plate for shaping.

Step S32: Drying the positive electrode plate and the negative electrode plate in vacuum to remove moisture.

Step S33: Winding or stacking the positive electrode plate, the diaphragm and the negative electrode plate.

Step S34: Welding tabs onto the positive electrode plate and the negative electrode plate respectively, applying adhesive and inserting them into the shell, so as to be assembled as the lithium-ion capacitor.

Step S35: Drying the lithium-ion capacitor in vacuum to remove trace amounts of moisture inside the lithium-ion capacitor.

Step S36: Injecting electrolyte into the lithium-ion capacitor and then let it stand still at high temperature between 40 °C and 45 °C.

Step S37: Performing initial charging of the lithium-ion capacitor and controlling the voltage upper limit between 4.0 V and 4.3 V so that Li⁺ is further released from lithium iron phosphate and the highly lithium-rich materials.

Step S38: Sealing the lithium-ion capacitor to prepare a complete lithium-ion capacitor.

Step S39: Performing initial discharging of the lithium-ion capacitor to a voltage of 2.0 V to 2.5 V, to obtain a capacity-sorted lithium-ion capacitor.

In an example, the positive electrode plate and negative electrode plate which have been processed via rolling are placed into a vacuum oven and dried at a temperature of 90 °C to 160 °C for 8 to 36 hours to remove trace amounts of moisture from the electrode plates, and the vacuum degree is controlled to be less than 1000Pa.

In an example, a winding process or a stacking process is used to assemble the positive electrode plate, the negative electrode plate and the diaphragm into a pole core of the lithium-ion capacitor, and the relative humidity of environment in this step is controlled to be less than 10%.

In an example, the pole core of the lithium-ion capacitor, a shell of the lithium-ion capacitor, and the tabs are assembled by welding to obtain an uncharged lithium-ion capacitor. The uncharged lithium-ion capacitor is then injected with electrolyte and stands still at high temperature so that the electrode plates are fully soaked in the electrolyte and absorbs the electrolyte.

In an example, the lithium-ion capacitor is placed in the vacuum oven and dried for 8 to 24 hours at a temperature of 80 °C to 100 °C to further dry out trace amounts of moisture inside the lithium-ion capacitor.

In an example, the lithium-ion capacitor after standing still at high temperature is charged for the first time (initial charging): the initial charging current is 0.1 C to 0.5 C and the charging time is 1 hour to 5 hours; and then the charging is performed at 0.2C until the voltage is between 4.0 V and 4.3 V; after the voltage reaches the required voltage, the charging is stopped for 30 to 60 minutes; then the charging is performed at a small current between 0.01C to 0.08C until the voltage reaches the above-mentioned upper limit voltage, and then the initial charging is completed.

In an example, the lithium-ion capacitor after completing the initial charging is sealed and welded to isolate the internal of the capacitor from the external. The lithium-ion capacitor then discharges at 0.2C to 1.0C to a voltage between 2.0V and 2.5V, to obtain the final individual lithium-ion capacitor.

An example of the present application also provides a lithium supplementing method for the lithium-ion capacitor, and the lithium supplementing method for the lithium-ion capacitor is applied to the lithium-ion capacitor of any one of the aforementioned examples. The lithium supplementing method for the lithium-ion capacitor comprises: during the initial formation charging in the formation process of the lithium-ion capacitor, the initial charging current is 0.1 C to 0.5 C, and the charging time is 1 hour to 5 hours; then, the charging is performed at 0.2C until the voltage reaches 4.0 V to 4.3 V; when the charging state reaches 70% to 100% of the state of charge (SOC), the charging is stopped for 30 to 60 minutes, the charging current is reduced to 0.01 C to 0.08 C, the initial charging is completed after the voltage reaches the upper limit voltage of 4.0 V to 4.3 V.

It can be understood that during the initial formation charging process, the charging voltage needs to reach an upper limit of 4.0 V to 4.3 V, which is the delithiation voltage for the lithium-rich material added to the positive electrode material, to release sufficient Li⁺ from its structure. When the charging state reaches 70% SOC to 100% SOC, the charging current needs to be reduced to 0.01C to 0.08C, so that the lithium-rich material can completely release Li⁺ under a charging condition with high voltage and low current, and thus a lithium supplementing effect is achieved.

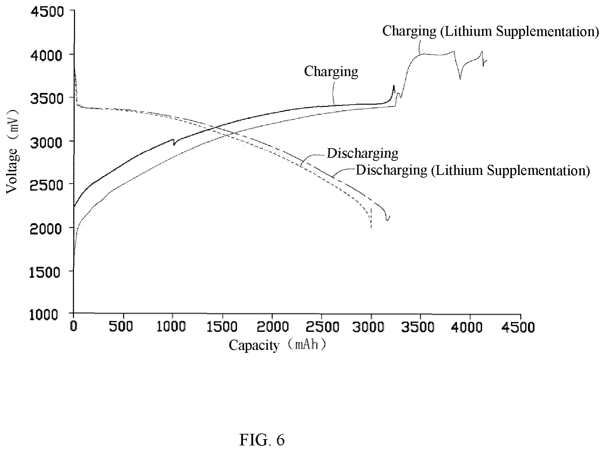

Furthermore, as can be seen in FIG. 6, which shows a comparison diagram showing the charging and discharging comparison between the lithium-ion capacitor (i.e. the line segment corresponding to "lithium supplementation" in the parentheses in the figure) prepared in examples of the present application and the lithium-ion capacitor without lithium supplementation in traditional technology, the lithium-ion capacitor prepared in the example of the present application has significantly better charging and discharging capabilities compared to the lithium-ion capacitor without lithium supplementation in traditional technology.

### Example 1

Step S11: Mixing 0.135Kg of PVDF powder with 1.215Kg of N-methyl-2-pyrrolidone, mixing and dispersing the mixture at high speed to obtain a PVDF adhesive solution.

Step S12: Adding 1.01Kg of carbon nanotube (CNT) slurry with a solid content of 5% and 0.185Kg of conductive carbon black to the PVDF adhesive solution, stirring and dispersing at high speed to form a conductive adhesive solution.

Step S13: Adding 0.15Kg of porous carbon material to the conductive adhesive solution, mixing, stirring and dispersing at high speed.

Step S14: Adding 2.85Kg of lithium iron phosphate and 0.0285Kg of lithium-rich lithium ferrite (Li₅FePO₄) into the conductive adhesive solution and adjusting the viscosity to 8,000-10,000 mPa·s after full stirring and dispersion to obtain the positive electrode slurry.

Step S15: Coating the positive electrode slurry evenly onto the aluminum foil with a surface density which is controlled between 140-160 g/m², drying to obtain the positive electrode plate, and then rolling the positive electrode plate with the compaction density being controlled between 2.0-2.1 g/cm³.

Step S21: Mixing 0.0422Kg of CMC-Li powder with 2.440Kg of deionized water, stirring and dispersing the mixture at high speed to obtain a CMC-Li adhesive solution.

Step S22: Adding 0.114Kg of conductive carbon black material to CMC-Li adhesive solution, stirring and dispersing at high speed to form a conductive adhesive solution.

Step S23: Adding 3Kg of hard carbon to the conductive adhesive solution, mixing, stirring, and dispersing at high speed.

Step S24: Continuing to add 0.186Kg SBR with a solid content of 49% into the conductive adhesive solution, fully stirring and dispersing to adjust the viscosity thereof to 2,000-4,000 mPa·s, so as to obtain the negative electrode slurry.

Step S25: Coating the negative electrode slurry evenly onto the copper foil with a surface density which is controlled between 90-120g/m², drying to obtain the negative electrode plate, rolling the negative electrode plate with the compaction density being controlled between 0.8-1.0g/cm³.

Step S31: Die-cutting the positive electrode plate and the negative electrode plate for shaping.

Step S32: Placing the positive electrode plate and the negative electrode plate in a vacuum oven and drying at 130 °C for 24 hours to remove trace amounts of moisture from the electrode plates, wherein the vacuum degree is controlled below 500Pa.

Step S33: Assembling the positive electrode plate, the negative electrode plate, and the diaphragm into a pole core of the lithium-ion capacitor by stacking them in a Z-shape, wherein the relative humidity of environment in this step is controlled to be less than 10%.

Step S34: Assembling and welding the pole core of the lithium-ion capacitor, a shell of the lithium-ion capacitor and tabs, to obtain an uncharged lithium-ion capacitor.

Step S35: Placing the lithium-ion capacitor in a vacuum oven and drying the same at 90 °C for 24 hours to further dry out the trace moisture inside the capacitor, wherein the comprehensive moisture content of the positive electrode plate, the negative electrode plate and the diaphragm is controlled within 300 ppm.

Step S36: Injecting electrolyte into the lithium-ion capacitor and then letting the lithium-ion capacitor stand still at a high temperature of 45 °C for 18 hours.

Step S37: Performing initial charging of the lithium-ion capacitor and controlling the voltage upper limit between 4.0V and 4.3V, so that Li⁺ is further released from lithium iron phosphate and the highly lithium-rich materials.

Step S38: Sealing the lithium-ion capacitor to prepare a complete lithium-ion capacitor.

Step S39: Performing initial charging of the lithium-ion capacitor: the initial charging current is 0.15 C, the charging time is 1 hour; and then the charging is performed at 0.2C until the voltage reaches 4.15V; after the voltage reaches 4.15V, the charging is stopped for 30 minutes; then the charging is performed at a small current of 0.015C until the voltage reaches 4.15V, and then the initial charging is completed.

Step S40: Sealing and welding the lithium-ion capacitor that has completed the initial charging, so that the internal of the lithium-ion capacitor is isolated from the external and then discharging the lithium-ion capacitor at 1.0C to reach the voltage of 2.2V to obtain a capacity-sorted lithium-ion capacitor.

The individual lithium-ion capacitor obtained in this example is indicated as A1.

### Example 2

Step S11: Mixing 0.135Kg of PVDF powder with 1.215Kg of N-methyl-2-pyrrolidone, stirring and dispersing the mixture at high speed to obtain a PVDF adhesive solution.

Step S12: Adding 1.01Kg of carbon nanotube (CNT) slurry with a solid content of 5% and 0.185Kg of conductive carbon black to the PVDF adhesive solution, stirring and dispersing at high seepd to form a conductive adhesive solution.

Step S13: Adding 0.15Kg of porous carbon material to the conductive adhesive solution, mixing, stirring, and dispersing at high speed.

Step S14: Adding 2.85Kg of lithium iron phosphate and 0.0855Kg of lithium-rich lithium ferrite (Li5FePO4) into the conductive adhesive solution and adjusting the viscosity to 8,000-10,000 mPa·s after full stirring and dispersion, to obtain the positive electrode slurry.

Step S15: Coating the positive electrode slurry evenly onto the aluminum foil with a surface density which is controlled between 140-160g/m², drying to obtain the positive electrode plate, and rolling the positive electrode plate with the compaction density being controlled between 2.0-2.1g/cm³.

Step S21: Mixing 0.0422Kg of CMC-Li powder with 2.440Kg of deionized water, stirring and dispersing the mixture at high speed to obtain CMC-Li adhesive solution.

Step S22: Adding 0.114Kg of conductive carbon black material to CMC-Li adhesive solution, stirring and dispersing at high speed to form a conductive adhesive solution.

Step S23: Adding 3Kg of hard carbon to the conductive adhesive solution, mixing, stirring and dispersing at high speed.

Step S24: Continuing to add 0.186Kg of SBR with a solid content of 49% into the conductive adhesive solution, fully stirring and dispersing to adjust the viscosity to 2,000-4,000 mPa·s so as to obtain the negative electrode slurry.

Step S25: Coating the negative electrode slurry evenly onto the copper foil with a surface density which is controlled between 90-120g/m², drying to obtain the negative electrode plate, rolling the negative electrode plate with the compaction density being controlled between 0.8-1.0g/cm³.

Step S31: Die-cutting the positive electrode plate and the negative electrode plate for shaping.

Step S32: Placing the positive electrode plate and the negative electrode plate in a vacuum oven and drying at 130 °C for 24 hours to remove trace amounts of moisture from the electrode plates, wherein the vacuum degree is controlled below 500Pa.

Step S33: Assembling the positive electrode plate, the negative electrode plate, and the diaphragm into a pole core of the lithium-ion capacitor by stacking them in a Z-shape, wherein the relative humidity of environment is controlled to be less than 10%.

Step S34: Assembling and welding the pole core of the capacitor, a shell of the capacitor and tabs, to obtain an uncharged lithium-ion capacitor.

Step S35: Placing the lithium-ion capacitor in a vacuum oven and drying the same at 90 °C for 24 hours, to further dry out the trace moisture inside the capacitor, wherein the comprehensive moisture content of the positive electrode plate, the negative electrode plate, and the diaphragm is controlled within 300ppm.

Step S36: Injecting electrolyte into the lithium-ion capacitor and then letting the lithium-ion capacitor stand still at a high temperature of 45 °C for 18 hours.

Step S37: Performing initial charging of the lithium-ion capacitor and controlling the voltage upper limit between 4.0V and 4.3V, so that Li⁺ is further released from lithium iron phosphate and the highly lithium-rich materials.

Step S38: Sealing the lithium-ion capacitor to prepare a complete lithium-ion capacitor.

Step S39: Performing initial charging of the lithium-ion capacitor: the initial charging current is 0.15C, the charging time is 1 hour; and then the charging is performed at 0.2C until the voltage reaches 4.15V; after the voltage reaches 4.15V, the charging is stopped for 30 minutes; then the charging is performed at a small current of 0.015C until the voltage reaches 4.15V, then the charging process is finished.

Step S40: Sealing and welding the lithium-ion capacitor that has completed the initial charging so that the internal of the lithium-ion capacitor is isolated from the external and then discharging the lithium-ion capacitor at 1.0C to reach a voltage of 2.2V to obtain a capacity-sorted lithium-ion capacitor.

The individual lithium-ion capacitor obtained in this example is indicated as A2.

### Comparative example

Step S11: Mixing 0.135Kg of PVDF powder with 1.215Kg of N-methyl-2-pyrrolidone, stirring and dispersing the mixture at high speed to obtain a PVDF adhesive solution.

Step S12: Adding 1.01Kg of carbon nanotube (CNT) slurry with a solid content of 5% and 0.185Kg of conductive carbon black to the PVDF adhesive solution, stirring and dispersing at high speed to form a conductive adhesive solution.

Step S13: Adding 0.15Kg of porous carbon material to the conductive adhesive solution, mixing, stirring, and dispersing at high speed.

Step S14: Continue to add 3.0Kg of lithium iron phosphate into the conductive adhesive solution and adjusting the viscosity to 8,000-10,000 mPa·s after fully stirring and dispersing, to obtain the positive electrode slurry.

Step S15: Coating the positive electrode slurry evenly onto the aluminum foil with a surface density which is controlled between 140-160g/m², drying to obtain the positive electrode plate, and rolling the positive electrode plate with the compaction density being controlled between 2.0-2.1g/cm³.

Step S21: Mixing 0.0422Kg of CMC-Li powder with 2.440Kg of deionized water, stirring and dispersing the mixture at high speed to obtain CMC-Li adhesive solution.

Step S22: Adding 0.114Kg of conductive carbon black material to CMC-Li adhesive solution, stirring and dispersing at high speed to form a conductive adhesive solution.

Step S23: Adding 3Kg of hard carbon to the conductive adhesive solution, mixing, stirring and dispersing at high speed.

Step S24: Continue to add 0.186Kg SBR with a solid content of 49% into the conductive adhesive solution, fully stirring and dispersing, adjusting the viscosity to 2,000-4,000 mPa·s so as to obtain the negative electrode slurry.

Step S25: Coating the negative electrode slurry evenly onto the copper foil with a surface density which is controlled between 90-120g/m², drying to obtain the negative electrode plate, rolling the negative electrode plate with the compaction density being controlled between 0.8-1.0g/cm³.

Step S31: Die-cutting the positive electrode plate and the negative electrode plate for shaping.

Step S32: Placing the positive electrode plate and the negative electrode plate in a vacuum oven and drying at 130 °C for 24 hours to remove trace amounts of moisture from the electrode plates, wherein the vacuum degree is controlled below 500Pa.

Step S33: Assembling the positive electrode plate, the negative electrode plate, and the diaphragm into a pole core of the lithium-ion capacitor by stacking them in a Z-shape, wherein the relative humidity of environment in this step is controlled to be less than 10%.

Step S34: Assembling and welding the pole core of the lithium-ion capacitor, a shell of the lithium-ion capacitor, and tabs, to obtain an uncharged lithium-ion capacitor.

Step S35: Placing the lithium-ion capacitor in a vacuum oven and drying the same at 90 °C for 24 hours to further dry out the trace moisture inside the capacitor, wherein the comprehensive moisture content of the positive electrode plate, the negative electrode plate, and the diaphragm is controlled within 300ppm.

Step S36: Injecting electrolyte into the lithium-ion capacitor and then letting the lithium-ion capacitor stand still at a high temperature of 45°C for 18 hours.

Step S37: Performing initial charging of the lithium-ion capacitor and controlling the voltage upper limit between 4.0V and 4.3V so that Li⁺ is further released from lithium iron phosphate and the highly lithium-rich materials.

Step S38: Sealing the lithium-ion capacitor to prepare a complete lithium-ion capacitor.

Step S39: Performing initial charging of the lithium-ion capacitor: the initial charging current is 0.15C, the charging time is 1 hour; and then the charging is performed at 0.2C until the voltage reaches 4.15V; after the voltage reaches 4.15V, the charging is stopped for 30min.; then the charging is performed at a small current of 0.015C until the voltage reaches 4.15V, then the charging process is finished.

Step S40: Sealing and welding the lithium-ion capacitor that has completed the initial charging so that the internal of the lithium-ion capacitor is isolated from the external and then discharging the lithium-ion capacitor at 1.0C to reach the voltage of 2.2V to obtain a capacity-sorted lithium-ion capacitor.

The individual lithium-ion capacitor obtained in this example is indicated as B.

Capacity-sorted capacity tests are conducted on A1, A2, and B respectively, and the test results are shown in Table 1.

**Table 1**

| | Lithium-ion capacitor | Capacity | Capacity increase rate |
|---|---|---|---|
| Example 1 | A1 | 3.186Ah | 3.41% |
| Example 2 | A2 | 3.378Ah | 9.65% |
| Comparative example | B | 3.081Ah | / |

The lithium-ion capacitor and lithium supplementing method provided in examples of the present application can improve the amount of lithium released from the highly lithium-rich materials during the initial charging process, compensating for the loss of lithium ions during the initial formation charging and thus enhancing the capacity utilization of the product.

Specific embodiments of the present application are described above with reference to the accompanying drawings. However, those of ordinary skills in the art can understand that various changes and replacements can be made to the specific embodiments of the present application without departing from the spirit and scope of the present application. These changes and replacements all fall within the scope defined in the present application.

## Claims

1. A lithium-ion capacitor, **characterized in that** the lithium-ion capacitor comprises a positive electrode plate and a negative electrode plate, the positive electrode plate includes a positive electrode material coated on the surface of a positive electrode current collector, the positive electrode material comprises a mixture of lithium iron phosphate, a conductive carbon material, a porous carbon material, and a polyvinylidene difluoride (PVDF) binder, the negative electrode plate includes a negative electrode material coated on the surface of a negative electrode current collector, the negative electrode material comprises a hard carbon, a conductive carbon material, a thickener and a Styrene-Butadiene Rubber (SBR) binder, and the thickener includes Carboxymethyl cellulose lithium (CMC-Li).

2. The lithium-ion capacitor according to claim 1, **characterized in that** the content of CMC-Li in the thickener accounts for 0.5% to 5% of the mass of the negative electrode material.

3. The lithium-ion capacitor according to claim 1, **characterized in that**, in the positive electrode material, the mass ratio of lithium iron phosphate is 85% to 98%, the mass ratio of conductive carbon material is 1% to 10%, the mass ratio of porous carbon material is 0.5% to 15%, and the mass ratio of PVDF binder is 2% to 7%.

4. The lithium-ion capacitor according to claim 3, **characterized in that** the positive electrode material further includes a lithium supplementing agent, and the lithium supplementing agent includes Li₂NiO₂ or Li₅FePO₄, wherein the lithium supplementing agent accounts for 0.1% to 6% of the mass of the lithium iron phosphate.

5. The lithium-ion capacitor according to claim 4, **characterized in that** the positive electrode material is prepared by coating a positive electrode slurry on the positive electrode current collector with a surface density of 100 g/m² to 220 g/m² and drying the same, the positive electrode slurry includes the positive electrode material mixed in N-Methyl-2-Pyrrolidone (NMP) solvent, wherein the NMP solvent is removed by drying at a temperature of 90 °C to 140 °C.

6. The lithium-ion capacitor according to claim 1, **characterized in that**, in the negative electrode material, the mass ratio of the hard carbon is 85% to 95%, the mass ratio of the conductive carbon material is 1% to 5%, the mass ratio of the thickener is 2% to 5%, and the mass ratio of the SBR binder is 0.5% to 5%.

7. The lithium-ion capacitor according to claim 6, **characterized in that** the negative electrode material is prepared by coating a negative electrode slurry on the negative electrode current collector with a surface density of 50 g/m² to 150 g/m² and drying the same, the negative electrode slurry includes the negative electrode material mixed in the deionized water, wherein the deionized water is removed by drying at a temperature of 80 °C to 120 °C.

8. The lithium-ion capacitor according to claim 1, **characterized in that** the positive electrode plate and the negative electrode plate are subject to rolling with a certain rolling pressure before forming, after rolling, the compaction density of the positive electrode plate is controlled between 1.9 g/cm³ and 2.3 g/cm³, and the compaction density of the negative electrode plate is controlled between 0.8 g/cm³ and 1.1 g/cm³.

9. An electric device, comprising a main body and the lithium-ion capacitor as described in any one of claims 1-8, wherein the lithium-ion capacitor is configured to enable the electric device to provide electrical energy to an external load.

10. A lithium supplementing method for the lithium-ion capacitor, **characterized in that**, the lithium supplementing method for the lithium-ion capacitor is applied to the lithium-ion capacitor of any one of claims 1-8, the lithium supplementing method for the lithium-ion capacitor comprises: during the initial formation charging in the formation process of the lithium-ion capacitor, the initial charging current is 0.1 C to 0.5 C, and the charging time is 1 hour to 5 hours; then, the charging is performed at 0.2C until the voltage reaches 4.0 V to 4.3 V; when the charging state reaches 70% to 100% of the state of charge (SOC), the charging is stopped for 30 to 60 minutes, the charging current is reduced to 0.01 C to 0.08 C, the initial charging is completed after the voltage reaches the upper limit voltage of 4.0 V to 4.3 V.
